# EUROPEAN PATENT APPLICATION

(11) **EP 1 848 163 A1**
(43) Date of publication of application: **24.10.2007**
(21) Application number: 06702680.7
(22) Date of filing: 13.01.2006
(51) Int. Cl.: H04L 12/56, H04Q 7/38

(54) **COMMUNICATION NETWORK CONTROL SYSTEM**

(30) Priority: 17.01.2005 JP 2005009301
(71) Applicant: Sharp Kabushiki Kaisha, Osaka-shi, Osaka 545-8522 (JP)
(72) Inventor: YAMADA, Shohei, Chiba, 2610004 (JP); MORIWAKI, Tetsuro, Saitama, 3300071 (JP); HIBI, Keiichi, Chiba 2700034 (JP)
(74) Representative: Müller, Frithjof E.
(86) International application number: PCT/JP2006/300324
(87) International publication number: WO 2006/075677

(57) **Abstract**

Smooth and seamless terminal switching which guarantees continuity of communication at the level of application is realized.

A communication network control system includes a mobility management unit 3 for setting up and managing a physical and logical transmission path between a communication terminal 23 and a communication receiver 17 by controlling the path for transmitting data packets, a session control unit 5 for controlling a session between the communication terminal 23 and the communication receiver 17 along the transmission path, a service shift control unit 21 for transmitting to the session control unit 5 a session switching request signal which instructs the session to be switched from communication terminal 23 to a communication terminal 25 to which the connection is to be switched, and a user associated information collecting and providing unit 31 for collecting a user profile which includes information on the user's location, the state of the network of the user and the preferences and interests of the user, and a device profile which includes the type of the device and the state of connection of each device to the network from each function element of the network, the user, the user terminal and a device in the vicinity of the user, and providing user associated information.

## Description

### Technical Field

The present invention relates to a technology for switching terminals in a communication network which provides mobile communication service, and in particular, to a technology for switching terminals where communication can be continued seamlessly and without interruption when a user switches the terminal he or she is using to a different terminal during communication.

### Background Art

In recent years, communication service at a higher degree has been expected to be realized as network services represented by the internet, and cellular phones have quickly spread and expanded. Though a so-called handover function or a mobility management function where communication continues even when a user moves while holding a terminal have been provided to cellular phones, this function is desired to be further developed to a higher level so that a function which allows communication to continue even if the terminal is changed during communication can be realized.

When it becomes possible to connect various terminals to a communication network as a result of expansion and development of the network, users can own various types of communication terminals which can be connected to a communication network. These communication terminals are not limited to portable terminals, such as cellular phones, but it is considered that information apparatuses, such as stationary home electronics which are installed within a house, for example, a television receiver (hereinafter, referred to as information apparatus), can also be used as a communication terminal.

Meanwhile, on the communication network side, it becomes easy to provide a common service to various types of communication terminals without recognizing a difference between wireless and wired access means in the network operator or in the service provider, by providing a common IP (internet protocol) backbone where IP communication technology that has been constructed through the development of the internet is used.

As a result, users can selectively use communication terminals they own, such as information apparatuses, for example, mobile communication terminals, PDA's and personal computers, depending on the current situation or the preference of the user, and then the same service is required to be used through a terminal the user owns or selects at a point in time. Furthermore, a situation where a terminal is desired to be switched to another terminal during communication can be assumed. In this case, it is necessary to realize the demand of the user in which the terminal can be switched to another terminal seamlessly, that is, without interruption, while maintaining the state of communication instead of the communication being cut off and connected again through another terminal.

There is a concrete example where video contents are distributed through streaming and viewed on a personal computer at home, and the receiving terminal is switched to a mobile communication terminal or a PDA when the user goes out so that the same contents can be continuously viewed on the terminal which is taken out with the user. In addition, there is another possible example where the user communicates with someone on a television phone while going out, and then comes home, and therefore, the television phone is switched to a television at home so that the communication with the other person can be continued.

In the case where a multicasting type distribution is received when the seamless switching of terminals is realized as described above, the data of the same contents is simultaneously distributed to a number (unspecified large number) of communication terminals from the terminal on the transmission side. Therefore, the receiving terminal may be connected to this terminal on the transmission side such that this data is received by the switching destination terminal, and thus, switching of the terminals can be realized relatively easily.

In the case of a unicasting type distribution where the communication is distributed to only a certain terminal or one-on-one communication, a procedure becomes necessary where an interruption of communication is instructed to the terminal on the transmission side, the switching destination terminal is connected to this terminal on the transmission side, and then, it is notified that the terminal on the receiving side has been switched, and after that, the communication is resumed.

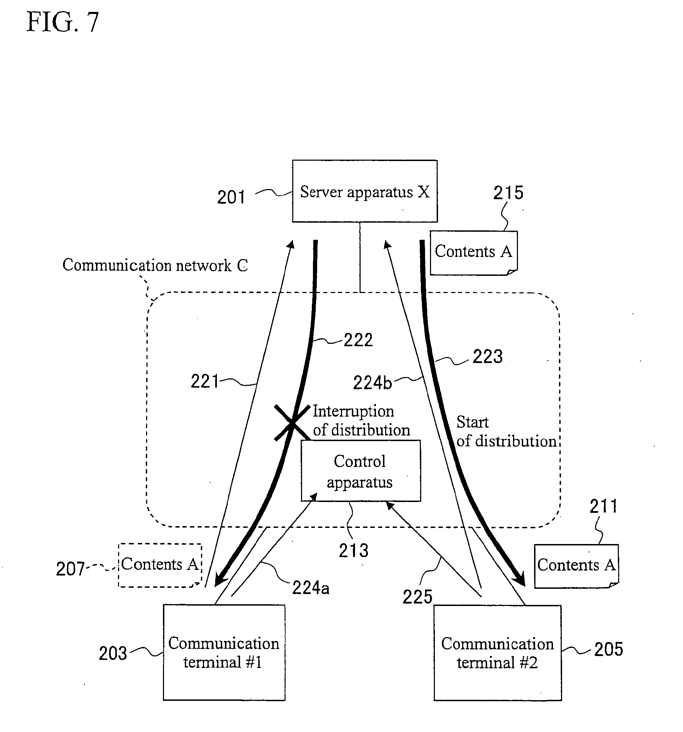

Fig 7 shows an example where terminals are switched in a control system of a conventional communication network as described above. Fig 7 shows an example in the case where a user switches a communication terminal (#1) 203, which is being used for the communication, to a communication terminal (#2) 205. First, the user transmits control information, as shown by arrow 221, from the communication terminal (#1) 203, which is receiving data, to a server apparatus 201 on the distribution side, and thus, instructs interruption of distribution. Next, the control information requesting an interruption of the communication connected to the server apparatus 201, as shown by arrow 224a, is sent out to a control apparatus 213 within the communication network, and thus, the communication is cut off.

Next, when the user sends out a request for connection to the server apparatus 201, as shown by arrow 225, to the control apparatus 213 in the communication network from the communication terminal (#2) 205, to which the connection is to be switched, the control apparatus 213 sets up a communication path between the communication terminal (#2) 205 and the server apparatus 201 within the communication network, and sets up the communication between these apparatuses. Subsequently, when the control information for instructing resumption of distribution, as shown by arrow 224b, is sent out from the communication terminal (#2) 213 to the server apparatus 201, the server apparatus 201 sends out data from the point in time when the distribution is interrupted so that the user can receive the following data using the communication terminal (#2) 205, that is, switching of the terminals can be realized.

Here, address information on the server apparatus 201 for the communication terminal (#2) 205, to which the connection is to be switched, to be connected to the server apparatus 201 is designated by means of the communication terminal (#2) 205, which is operated by the user so that the address information is inputted in the form of a telephone number, a URL or the like. In this example, the control apparatus 213 in the communication network only makes and cuts off the connection between the communication terminal (#1) 203 or the communication terminal (#2) 205 and the server apparatus 201 and does not have the control function for switching terminals. Thus, the switching of terminals can be realized by using only the communication terminals and the functions of interrupting and resuming communication in the server apparatus.

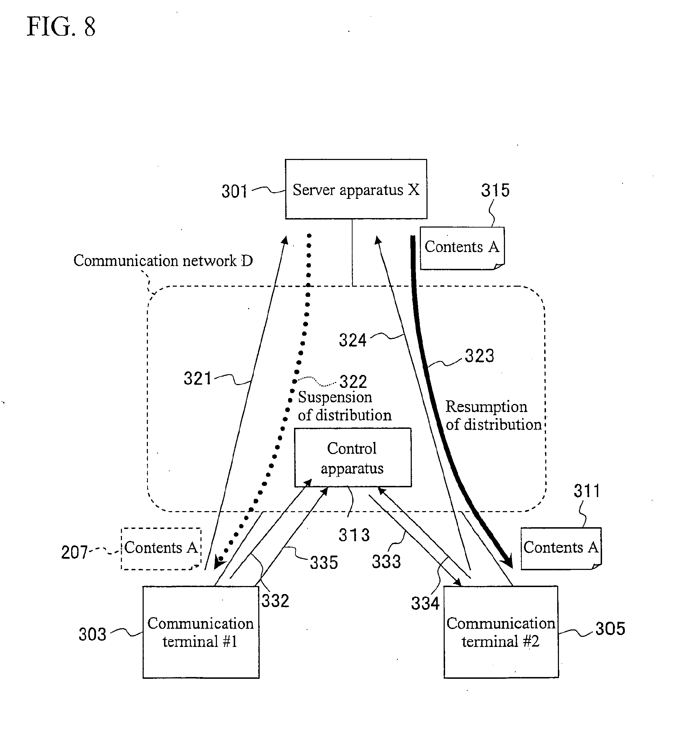

Fig 8 shows a conventional example of another method for switching terminals. A communication terminal (#1) 303 on the receiving side sends out the control information for instructing a server apparatus 301 on the distribution side to interrupt the distribution, as shown by arrow 321, when terminals are switched. When the user carries out a transfer operation after the communication with the server apparatus 301 has been suspended, the communication terminal (#1) 303 sends out the control information for requesting the transfer of the connection with the server apparatus 301 to a communication terminal (#2) 305 to a control apparatus 313 in the communication network, as shown by arrow 332.

The control apparatus 313 which has received the control information sends out the control information for instructing the communication terminal (#2) 305 to connect with the server apparatus 301, as shown by arrow 333, and thus, calls the communication terminal (#2) 305 and sets up a communication path between the communication terminal (#2) 305 and the server apparatus 301 so that a connection is established when the communication terminal (#2) 305 responds to this call, as shown by arrow 334.

Thereafter, as shown by arrow 335, upon the transmission and reception of the control information between the communication terminal (#1) 303, which is the transfer source and the control apparatus 313, the connection between the communication terminal (#1) 303 and the server apparatus 301 is cut off. At the same time, the communication terminal (#2) 305 sends out the control information for requesting resumption of the suspended communication, as shown by arrow 324, to the server apparatus 301, and thus, the communication terminal (#2) 305 receives the following data. In this example, though the control apparatus 313 within the communication network has a control function for transferring a call to another terminal, this control apparatus 313 does not have a function of controlling the interruption and resumption of data transmission and reception between the communication terminal and the server apparatus, and thus, does not guarantee the continuity of communication, that is, seamless switching (Non-Patent Document 1).

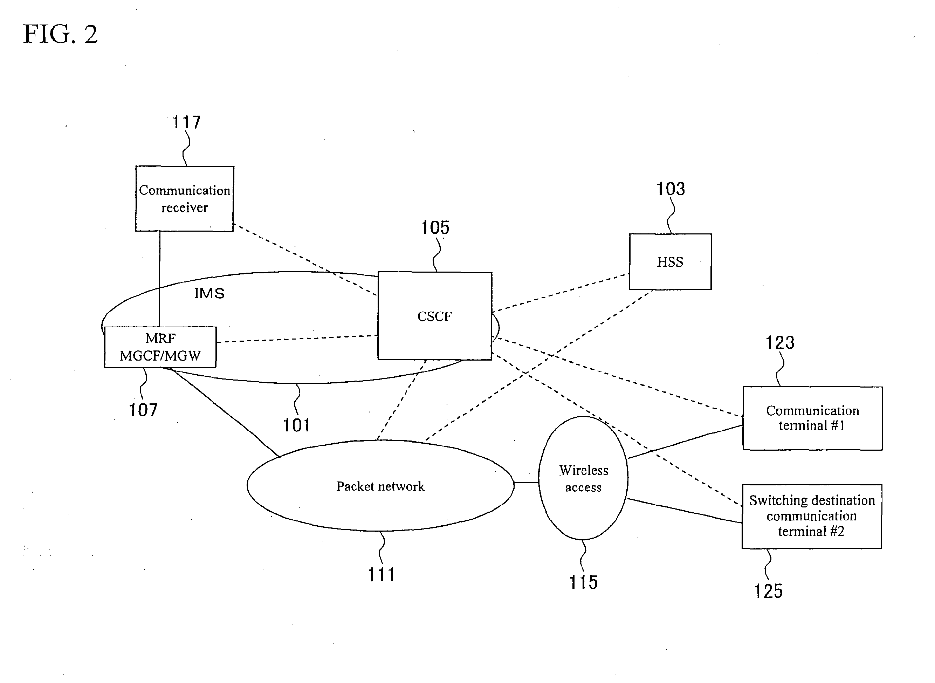

In addition, Fig 2 shows an example of a configuration of a third generation mobile communication of which the standard is defined by 3GPP as the configuration of a conventional communication network. IMS (IP Multimedia CN Subsystem) has a purpose of providing an IP multimedia service through a packet exchanging system, and to do so, a session control function is arranged within the network 101. SIP (Session Initiation Protocol) is adopted as the session control protocol. CSCF 105 is a call state control function and communicates with HSS (Home Subscriber Server) 103 as a registered server of the SIP so as to carry out a user registering process, transfer session information and control the call connection. It also has an interface for communicating with an application server in order to provide a service. In addition, the HSS 103 manages the subscriber and location information of users. MRF (Media Resource Function) 107 controls the resource of media streaming and carries out media synthesis and the conversion of media streams in a multimedia conference and the like. In addition, MGCF (MediaGateway Control Function) and MGW (MediaGateway) carry out media conversion at the time of the connection with PSTN (Public Switched Telephone Network). However, there are no mechanisms where a service is continuously provided to a terminal 123 or 125 for wireless access 115 to a receiver of communication 117 via a network 101 and a packet network 111 even after change (see Non-Patent Document 2).
Non-Patent Document 1: Yabusaki et al. "All-IP Conversion in Mobile Network, Special Issue," NTT DoCoMo Technical Journal, Vol. 10, No. 4, January 2003, pp. 6-34
Non-Patent Document 2: 3GPP TS22. 228, V5. 6. 0

### Disclosure of the Invention

### Problems to be Solved by the Invention

In any of the conventional examples, however, the continuity is secured by the suspension and resumption of the communication between the communication terminal and the server apparatus, that is, between both ends, when terminals are switched, and thus, a technology for guaranteeing seamless switching without interruption is not used. That is, in any of the conventional examples, a function of suspending communication, that is, data transmission, is provided in a server apparatus, and after the suspension, the resumption of data transmission is required from another communication terminal, so that the switching of terminals is realized only in appearance. In the case where contents stored in a server apparatus are distributed in one direction towards a communication terminal, or in the case of two directional, one-on-one real time communication, such as a television phone, the function to a certain degree can be realized.

In the case where the communication application in an upper level has a state corresponding to the transmission data, for example, in the case where a communication type game is continued on another terminal or group work where the same document is edited through communication is done, however, there is a problem that it is difficult to inform the switching destination terminal of the state of the communication application.

More specifically, in the case where a number of communications (connections) are set up between the applications on the ends even in a service, such as communication between television phones or contents distribution, for example, in the case of an application where a large number of media are simultaneously used or an application where various types of contents or information are used in cooperation, there is a problem that a process or procedure for switching to another terminal becomes complicated.

In addition, there are problems as follows.

1) Since contents are received in an optimal communication form (bit rate, resolution and the like) corresponding to the capability of a terminal as the terminal is switched, it is difficult to provide a service which works in cooperation with the control of the communication network so that the quality of the service (bit rate, delay and the like) in the network can be appropriately controlled.

2) It is also difficult to determine whether the quality of the service is appropriately switched as described above on the network control side or on the receiver of communication side, or to decide that the quality of the service is switched according to the preference of the user.

3) In addition, there is a problem that it is difficult to provide a service for finding what type of terminal exists in the periphery and controlling the switching to a terminal after it has been determined which terminal the connection should be switched to.

An object of the present invention is to provide a seamless and ubiquitous service environment where it is not necessary for a user to be aware of the difference in wireless and wire networks and service or the difference in the type of communication terminal, unlike in the prior art.

### Means for Solving the Problem

A communication network control system according to the present invention has user associated information collecting and providing means for collecting a user profile which includes the state of the network, information on the user's location, and the preference and interests of the user, and a device profile which includes the type of device and the state of the connection of each device to the network from each functional element of the network, the user, the user terminal and the peripheral device of the user, and providing user associated information in a communication network system including mobility management means for setting up and managing a physical and logical transmission path between the communication terminal and the receiver of communication by controlling the path for data packet transfer, session control means for controlling a session between the communication terminal and the receiver of communication along the transmission path, and service shift control means for transmitting a session switching request signal, which instructs the session to be switched to a switching destination communication terminal from the communication terminal, to the session control means.

The service shift control means determines whether a terminal switching request signal is received from the communication terminal or the terminal is switched on the basis of the user associated information, and thus, generates a session switching requesting signal. The session control means performs a function of receiving the session switching requesting signal to interrupt the session, a function of instructing the mobility management means to set up a transmission path with the switching destination communication terminal, a function of establishing a session with the switching destination communication terminal, and a function of resuming the session with the receiver of communication after the establishment of the session. As a result, the communication can be controlled so as to be continued by switching at least one communication terminal which is being used for this communication to another communication terminal which is not being used for the communication without interrupting the communication between the communication terminals. Thus, a function of managing and controlling a session between the ends, that is, a logical transmission path between the applications using the transmitted data, and a function of transferring the session are achieved in addition to a function of setting up and managing a transmission path for data in a communication network. Therefore, it becomes possible to realize a smooth and seamless switching of a communication terminal, including the management of the session state and the application.

In addition, it becomes possible to determine whether or not a terminal is switched corresponding to the environment of the user, and it becomes possible to provide service control on the network side in accordance with the user's location and the network state. In addition, since means for instructing switching of the terminal while maintaining the provision of the user associated information concerning the service and the service and means for establishing a session between terminals are separated, a more efficient network control becomes possible. Furthermore, this can be realized by adding service shift control means to the CSCF which controls a session in the existing 3GPP system.

In addition, the communication network control system according to the present invention is characterized in that the service shift control means has a function of determining media to which the media is to be converted, which acquires the device profile of the communication terminal and the switching destination terminal from the user associated information, as well as media switching capability information from the receiver of communication, and instructs conversion of the media at the media control means or change of the session to the receiver of communication, and a media conversion process determining function for determining which media conversion is carried out, wherein the service shift control means generates information on an instruction to change the session and an instruction to change media on the basis of the determination of media to which the media is to be converted and the media conversion process determination.

As a result, it becomes possible to automatically determine whether the media should be converted on the network side or in the receiver of communication, in order for the state of service to be maintained, in terms of the media switching capability of the receiver of communication and the terminal capability in the communication terminal and the switching destination communication terminal.

In addition, the communication network control system according to the present invention is characterized in that the user associated information collecting and providing means manages the determination standard for media to which the media is to be converted of the user and the media conversion process as user preference and the service shift control means generates information on media conversion instruction on the basis of the user preference.

As a result, the user can set his or her own preference in advance and set which service provider is desired to convert the media and which media conversion process is desired, and thus, service which has expandability and flexibility can be provided to the user and to the service provider.

In addition, the communication network control system according to the present invention is characterized in that the communication terminal has means for communicating with the switching destination communication terminal, and acquires information on terminal presence indicating the state and the address of the switching destination communication terminal and information on terminal capability, which includes information on of what type the switching destination communication terminal is, the attributes, the process, the available bit rate, the type of media and the type of codec from the switching destination communication terminal, the terminal switching request signal includes information on the terminal presence and information on the terminal capability of the switching destination communication terminal, and the service shift control means generates a session switching request signal on the basis of the terminal switching request signal and registers the information on the terminal presence and the information on the terminal capability in the device profile.

As a result, session control becomes possible even in the case where the communication network side does not have information on the switching destination communication terminal, and a new device can be registered at the same time.

In addition, the communication network control system according to the present invention is characterized in that the communication terminal operates as the switching destination communication terminal, an instruction requesting only change in the connection path instead of switching of the terminal is transmitted as a terminal switching request signal, or it is determined whether or not the path is switched on the basis of the user associated information, and as a result, the service shift control means generates a session switching signal which instructs switching of the session within the communication terminal and transmits the session switching signal to the session control unit.

As a result, it becomes possible to maintain the service when the connection is switched to a network having a different access method and a different operator using a communication terminal.

### Effect of the Invention

According to the present invention, the user can switch the communication terminal used through a simple button operation or the like at the time when switching is requested in accordance with the change in his/her situation with the effort required for operation and loss of time greatly reduced in comparison with in the prior art, and thus, can enjoy service at a higher level. There is also an advantage such that distribution service can be continued in the server apparatus on the distribution side without mounting any special new functions. Furthermore, since the data format is optimized for individual communication terminals before being transmitted even when the capability is different between the communication terminals on the receiver side, there is an advantage such that there is no load on the communication terminal side and the server apparatus side. In this manner, the basis for providing service is shared, so that the user is not aware of the difference in the wire and wireless networks and service, or the difference in the type of communication terminal, unlike in the prior art. This makes it possible to enjoy a seamless and ubiquitous service environment.

### Brief Description of the Drawings

Fig 1 is a diagram schematically showing the configuration of a communication network control system according to a first embodiment of the present invention;
Fig 2 is a schematic diagram showing an example of the configuration of a conventional communication network control system;
Fig 3 is a diagram showing an example of the configuration of a database in a user associated information collecting and providing unit;
Fig 4 is a diagram showing a procedure for switching terminals in the communication network control system according to the present embodiment;
Fig 5 is a schematic diagram showing a communication network control system in terms of switching of an access method according to a second embodiment of the present invention;
Fig 6 is a diagram showing a procedure for switching a path in the communication network control system in terms of switching of the access method according to the present embodiment;
Fig 7 is a diagram showing an example of terminal switching in the communication network control system; and
Fig 8 is a diagram showing an example of terminal switching in the communication network control system.

### Explanation of Symbols

A ... communication network control system, 3 ... mobility management unit, 5 ... session control unit, 11 ... IP transport network, 21 ... service shift control unit, 31 ... user associated information collecting and providing unit, 33 ... network state, 35 ... user profile, 37 ... device profile

### Best Mode for Carrying Out the Invention

A communication network control system according to the present invention has a function of managing and controlling a session at the ends, that is, a logical transmission path between applications using transmitted data, and a function of transferring the session, in addition to a function of setting up and managing a transmission path for data in a control apparatus within a communication network. These functions allow communication terminals to be switched smoothly and seamlessly, including management of the session state and the application.

In addition, the communication terminal according to the present invention has a function of making notification of the session state and the application in order to switch terminals and a function of setting the session and the application to the state of which notification has been made as described above, and then, resuming this state. These functions allow terminals to be switched smoothly and seamlessly while maintaining the session in an appropriate state.

Furthermore, handover and mobility management functions for switching to an appropriate transmission path following the changes in the location of the communication terminal and address information, which are provided through a mobile communication network or the like, are used in cooperation with the session control function, and thus, a function of setting a transmission path when the communication terminal is switched is realized with minimal change from the prior art. Thus, a session control function having high flexibility and expandability is realized.

In the next generation mobile communication networks, it is assumed that all IP based platforms where all data is transmitted and exchanged in the form of IP packets will be formed for use. In addition, provision of a so-called call and control separating type architecture where the function of transmitting data and the control function of call setting, routing management and the like are clearly separated has been examined. In such an architecture, a transport layer, which is a lower layer, is specialized in the function of transmitting data, that is, IP packets, efficiently and at high speed and the function of controlling the path (routing) and controlling traffic are allocated in the connection control layer, and this connection control layer instructs the transport layer to allocate routing and resources of the IP packets in the configuration, which enables to achieve increase in the speed and increase in the efficiency in the system as a whole. In all-IP based platforms, it is assumed that control signals, such as call control and signaling are transferred in the form of IP packets.

Furthermore, in the above-described all-IP based architecture, provision of a function for supporting service in order to increase the level of the network and add more value such that various communication services can be flexibly and freely provided has been examined. This means that a call control function for setting up a physical and logical transmission path at the ends is the main function in previous networks, which mainly handle speech sound telephone calls, while in next generation networks, a function of controlling a session, which is logical connection between communication applications at ends, will be provided within the network.

Here, call and call connection indicate (setting up of) a physical and logical path for transmitting data to a receiver between terminals at the ends, and session indicates that a communication application at a terminal is in such a state as to be able to receive and process (has processed) data from the application in the terminal of the receiver of communication. More specifically, a state where data can be transmitted to or received from a receiver terminal but it is not determined which application should be used or no application is prepared is a state in which call connection can be achieved but no session is connected. Conversely, a state where the application is prepared to transmit or receive data while the data transmission path is lost (for example when a cellular phone is moved out of range) is a state where a session is connected but no call connection is achieved.

So far, call connection has mainly been described. In conventional speech sound telephone calls, call connection and sessions are not particularly distinguished, but in the case of multimedia communication or data communication, a session is set up between applications of communication terminals along the transmission path established at the ends after setting up of the call connection. For the next generation mobile communication networks, inclusion of a session control function within the network has been examined. This is because it has become necessary for the network to have such functions as connection control and communication control in accordance with various forms of communication, modes and media, due to diversification and increase in the level of communication. In the case where, for example, the difference between calls of only speech sound and television phone calls, the quality and the terminal capability, such as resolution and bit rate, in the television phones are designated for a receiver when a call is made, it is necessary for the capability of the network to include functions of address solution for designated terminals which satisfy these requirements and setting up of a transmission path having appropriate quality (call control, path control) and the like, which cannot sufficiently be provided through negotiation between the ends.

Therefore, a session control unit for session control is provided, so that a session, that is, a state of communication or the mode between the applications at the ends, is managed and controlled, and this session control function instructs and controls the call control function and the path control function in the mobility management unit to set up a transmission path in an appropriate band having appropriate quality in the configuration. At this time, connection request (session setup request) from the application at the communication terminal is sent to the session control function so as to be processed.

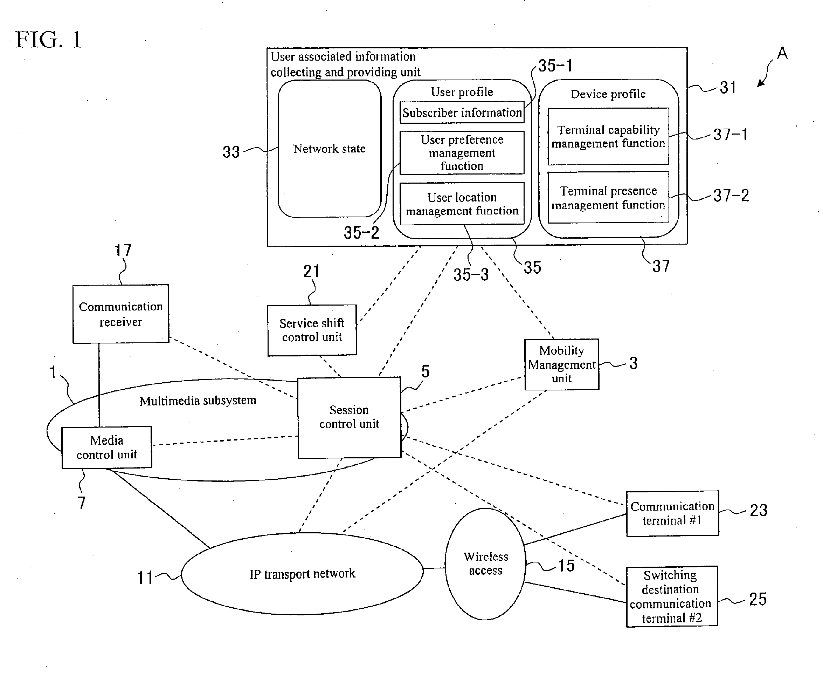

Fig 1 shows an example of the configuration of a communication network control system according to a first embodiment of the present invention. As shown in Fig 1, a communication network control system A according to the present embodiment includes an IP transport network 11 for transferring IP packets, a mobility management unit 3 for controlling the IP transport network 11 and managing the physical location of the communication terminals, controlling calls and controlling handover (controls paths), as described above, a session control unit 5 for establishing and managing sessions, and a service shift control unit 21 which is charged with dealing with higher level requirements by the user so that communication terminals are switched while maintaining the session.

The mobility management unit 3 corresponds to the HSS 103 of the IMS in Fig 2, and is a functional element which is specialized particularly to control the IP transport network. The session control unit 5 corresponds to the CSCF 105 of the IMS in Fig 2, and the service shift control unit 21 is a new functional element for the IMS in Fig 2. However, it is construable that the service shift control unit 21 is realized as a result of function expansion of the CSCF 105 in Fig 2. In order to switch terminals while maintaining the service, the service shift control unit 21 allows a terminal to request the session control unit to instruct switching of terminals, a terminal switching request to be received by the session control unit, a session switching request signal to be transmitted to the session control unit, and a user associated information collecting and providing unit 31 to be informed of the state of the user, so that a session switching request signal can be automatically transmitted in accordance with the state of the user.

The user associated information collecting and providing unit 31 manages a network state 33, a user profile 35 concerning the user, and a device profile 37 concerning the device, collects information from functional elements of various networks, and provides information to function elements of various services and networks. This is a function further expanded from the HSS 103 of the IMS 101 shown in Fig 2, and may be realized by being integrated with the mobility management unit 3 and expanding the function of the HSS 103 shown in Fig 2. The user profile 35 is made up of subscriber information 35-1, a user preference management function 35-2, and a user location management function 35-3. Information on the user's location can be acquired from information on access points from the mobility management unit 3, information on the speed of movement and information from GPS's mounted on RFID's in the periphery and the communication terminal.

The preference and interests of the user are managed in accordance with such a method that the user sets the user location, the speed of movement, the type of wireless access corresponding to the type of device used, the type of service, a method for roaming, a terminal to which media conversion is to be carried out, and a method for converting media in advance, or the history of use as described above on the network side is managed and the preference and interests of the user are guessed on the basis of the history and set.

The device profile 37 has terminal capability information 37-1 which includes the form of the terminal, the data conversion system, compatibility with animation, the size of the screen and the like, and terminal presence information 37-2 which includes the situation (location) of the terminal at the time. The device profile 37 is acquired when information is transmitted from the terminal so as to be automatically managed on the network side at the time registered by the user in advance, or when the terminal is connected to the network. In addition, in the case where the switching destination communication terminal is not registered, short distance communication is used, so that the terminal capability information on the switching destination communication terminal can be acquired so as to be included a terminal switching request signal and transmitted from the communication terminal, and thus registered in the device profile 37.

The device profile 37 and the user profile 35 are associated with information on the user's location and information on the owner of the device. Accordingly, in some cases, the user is associated with a public device which is not the user's own device, or a shared device.

Terminal capability information on terminal capability managed by the terminal capability management function 37-1 is information indicating the type, the attributes, the process, the IP address and the available bit rate of the terminal, the type of media and the type of codec, the size of the screen, the capability of the CPU, the connectable networks and the like. Terminal presence information managed by the terminal presence management function 37-2 indicates the type and state of the application currently running, information on the current terminal's location and the like. The network state 33 is acquired from information on the type of wireless access from the mobility management unit 3, information on QoS from the session control unit 5, information on the session state, information on the state of media conversion in the media converting unit and information on the state of the application currently running in the communication terminal. The terminal registered in the device profile manages not only the state of the network in the communication terminal but also the state of the network currently connected (transmission rate, wireless system, QoS and the like). Here, in the above description, indispensable configuration features are the network state 33, the subscriber information 35-1 and the terminal capability function 37-1.

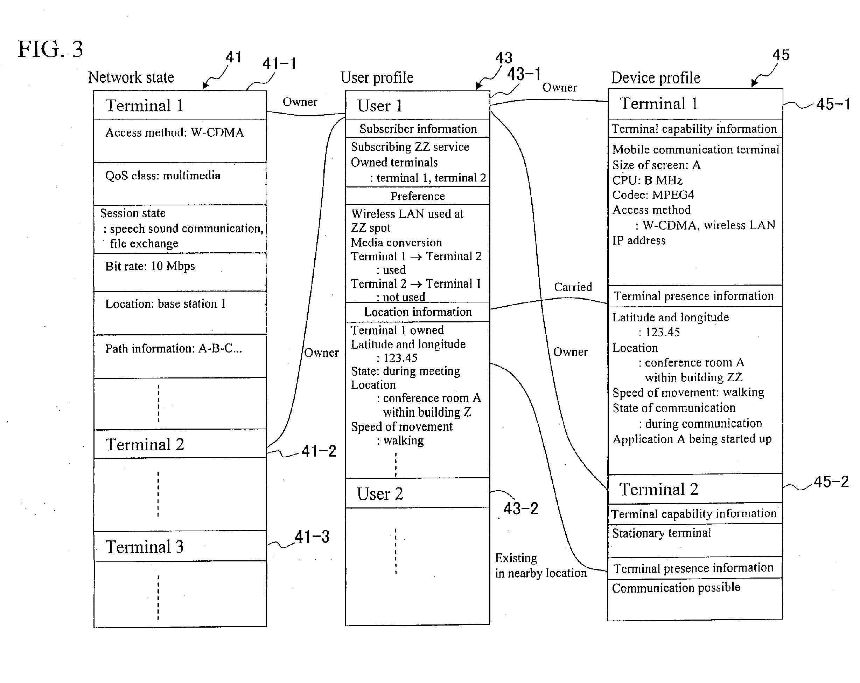

Fig 3 is a diagram showing an example of a database for a network state, user profile and device profile. The database is managed through abstract descriptions using such a language as XML (extensible Markup Language), and information on the database is provided to the service shift control unit 21 (Fig 1; in the following, the figure number is omitted for description).

As shown in Fig 3, a network state 41, a user profile 43 and a device profile 45, for example, are associated with one another. The network state 41 is formed of a terminal (1) 41-1, a terminal (2) 41-2 and a terminal (3) 41-3. For the terminal (1) 41-1, for example, W-CDMA is described as the access method, multimedia is described as the QoS class, speech sound communication is described as the session state, file exchange is described, 10 Mbps is described as the bit rate, a base station 1 is described as the location and path information A-B-C... is described. In the user profile 43, subscriber information, preference, location information and the like are described, in terms of information on a user (1) 43-1 who is the owner of the terminal (1) 41-1, for example. In this case, it is also indicated that the owner of the terminal (2) 41-2 is also the user 1. In the device profile 45, the mobile communication terminal, the size of the screen, the clock number of the CPU, the codec, the access method, the IP address and the like, which are terminal capability information on the terminal (1) 41-1, are described. As the terminal presence information, information on longitude and latitude, information on the location, the speed of movement, the state of communication, the existence and type of application that has been started up and the like are described. As the information on the terminal (2) 41-2, it is described, as the terminal capability information, that the terminal is stationary, for example, and information on whether or not communication is possible is described as the terminal presence information. Thus, these pieces of information 41, 43 and 45 are associated with one another on the basis of the owner, the situation of communication, the location and the like.

When information on a certain user is requested from the service shift control unit 21, the terminal owned by the user and terminals in the vicinity of the user's location are associated with each other and provided in the service shift control unit 21 as a group of associated information.

In addition, the media control unit 7 corresponds to expanded MRF and MGCF/MGW 107 in the IMS 101. Media conversion of the bit rate, the codec, the size of the image, the media format and the like of the contents is controlled and carried out in response to the media conversion request from the session control unit 5. In the case where the media are converted after switching of the terminal, buffering is carried out in the unit, which allows for media conversion until the media are converted after resumption of the session. At this time, encoding is carried out again, and therefore, authentication function, for example, using an electronic watermark, may be added to the contents.

For the purpose of simplifying the description, these function elements of the communication network control system are shown as a single module in the respective figures. In reality, however, function elements as those described above are placed in the respective networks or the area in which the user roams by taking a case of roaming and a case where the receiver of communication is outside the same network into consideration, and thus, are not realized in one module. The description of the embodiment is simplified by regarding such use collectively as one process.

The communication terminals are also provided with a user interface formed of an image display apparatus, an input apparatus and the like (not shown), and a short distance communication unit using infrared rays, Bluetooth (registered trademark), a wireless communication system, such as UWB, which is expected to become prominent in the future, or wired communication, such as USB systems. The communication terminals have a function of requesting terminal switching, a function of making notification of a terminal ID, a function of reproducing the state of a session, a function of managing a session, a function of sending out the state of a session, a function of requesting and responding to calls, and a function of registering locations. The receiver of the communication may be an application server apparatus or a communication terminal.

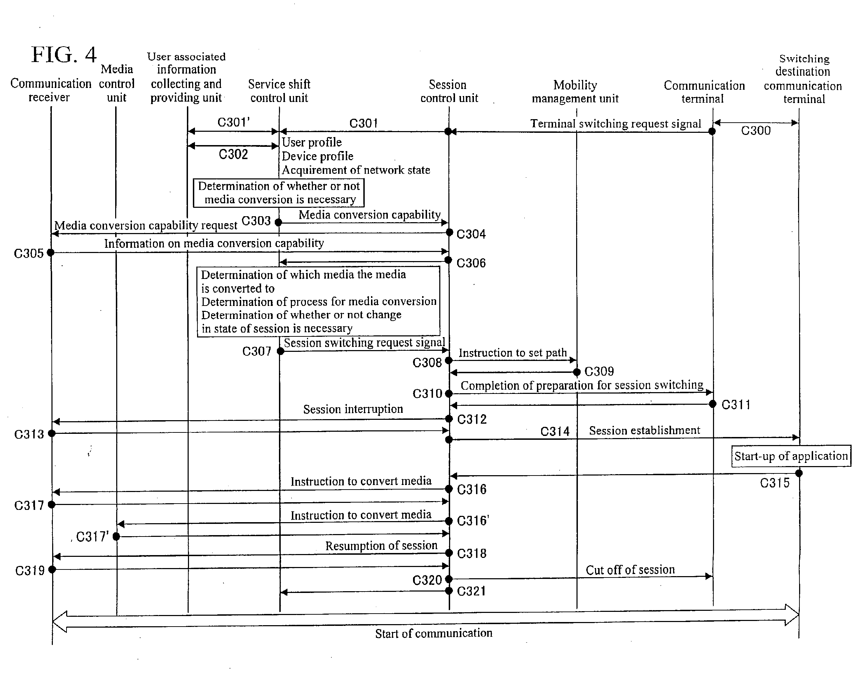

Next, the procedure of switching terminals will be described with reference to Fig 4. Fig 1 is also referred to whenever necessary. First, the communication terminal 23 generates a terminal switching request signal, and at this time, it is necessary to designate to which terminal the connection is to be switched. Available methods include a method for communicating with a switching destination communication terminal 25 using short distance wireless communication to acquire terminal information on the switching destination communication terminal 25, and thus preparing a terminal switching request signal (C300), and a method according to which a user selects a switching destination communication terminal 25 in a state where the communication terminal 25 has acquired a switchable terminal list from the user associated information collecting and providing unit 31 so as to instruct preparation of a terminal switching request signal (C301). The terminal switching request signal may include the session state of the communication terminal 23, the state of the application and the like. Alternatively, the service shift control unit 21 may periodically exchange information with the user associated information collecting and providing unit 31 so as to determine whether or not the user environment is in such a state that the terminal should be switched (C301').

As an example of the state where the terminal should be switched, in cases where the state of the network in the communication terminal (#2) 25 is more stable than the state of the network in the communication terminal (#1) 23 according to information on the state of the network or in cases where the network in the communication terminal (#2) 25 is faster, the possibility that the terminal will be switched is high. Alternatively, the terminal can be switched in cases where it is determined that there are two terminals which can be used by the user in the current user's location using user preference information, information on the user's location and the terminal presence information, and what the user will use with priority in this location (determination from user preference information) is determined to be the switching destination terminal (#2) 25.

The service shift control unit 21 requests information on the user profile 35, the device profile 37 and the network state 33 from the user associated information collecting and providing unit 31, and acquires this. In the case where the terminal switching request signal in the C301 includes terminal information on the switching destination communication terminal, a task of registering the terminal information in the device profile 37 is also carried out (C302). Next, the service shift control unit 21 determines whether or not media conversion is necessary from the user profile 35, the device profile 37 and the network state 33 acquired from the user associated information collecting and providing unit 31 and the terminal switching request signal.

In the case where it is determined from the preference and tendencies of the user and the difference in capability between the communication terminal 23 and the switching destination communication terminal 25 that media conversion is necessary, the session control unit 5 is requested to ask whether or not media conversion is possible in the communication receiver 17 (C303). However, this procedure can be omitted in the case where the media conversion capability in the communication receiver is acquired when the user profile 35, device profile 37 and network state 31 are acquired.

The session control unit 5 makes inquiry about the media conversion capability to the communication receiver 17, acquires information on the media conversion capability, and makes notification of the information on the media conversion capability to the service shift control unit 21 (C304, C305, C306).

Upon receiving the information on the media conversion capability, the service shift control unit 21 selects media to which the media is to be converted and the content of the media conversion process and determines whether or not change in the session state is necessary from the information that has been acquired up to that point, and transmits a session switching request signal including these to the session control unit 5 (C3 07). The session control unit 5 instructs the mobility management unit 3 to set up a path (C308). When setting up of the path is completed, a response (ACK) is returned from the mobility management unit 3 (C309). When this path is set up, a call process is carried out in the case where the switching destination communication terminal 25 is not active. At this point in time, two paths between the communication receiver 17 and the communication terminal 23 and between the communication receiver 17 and the switching destination communication terminal 25 are set up. Thus, the settings are fine as they are in the case where it is possible to set up two paths simultaneously, for example in multicasting, while a process for suspending one of the two paths becomes necessary in the case where it is not possible to set up two paths.

Next, the session control unit 5 transmits a session switching preparation signal indicating that the preparations for switching the session are ready to the communication terminal 23, and the communication terminal 23 returns whether or not switching of the session is accepted (C310, C311). When the terminal is automatically switched from the network side, this becomes a message to confirm whether or not the connection may be switched to the communication terminal 23. The session control unit 5 requests interruption of the session to the communication receiver 17. When ACK is returned from the communication receiver 17, the session with the switching destination communication terminal 25 is established, and during this time, the switching destination communication terminal 25 starts up an application (C312 to C315).

The session control unit 5 follows the instruction to convert media included in the session switching request signal, and instructs the media control unit 7 or the communication receiver 17 to convert the media (C316, C317, C316', C317'). Subsequently, the session is resumed, and the session with the communication terminal is cut off (C318, C319, C320). At this time, the transmission path is also cut off by the mobility management unit 3. Finally, a signal indicating the completion of switching of the session is transmitted from the session control unit 5 to the service shift control unit 21 (C321). As a result, communication between the communication receiver 17 and the switching destination terminal 25 can be started.

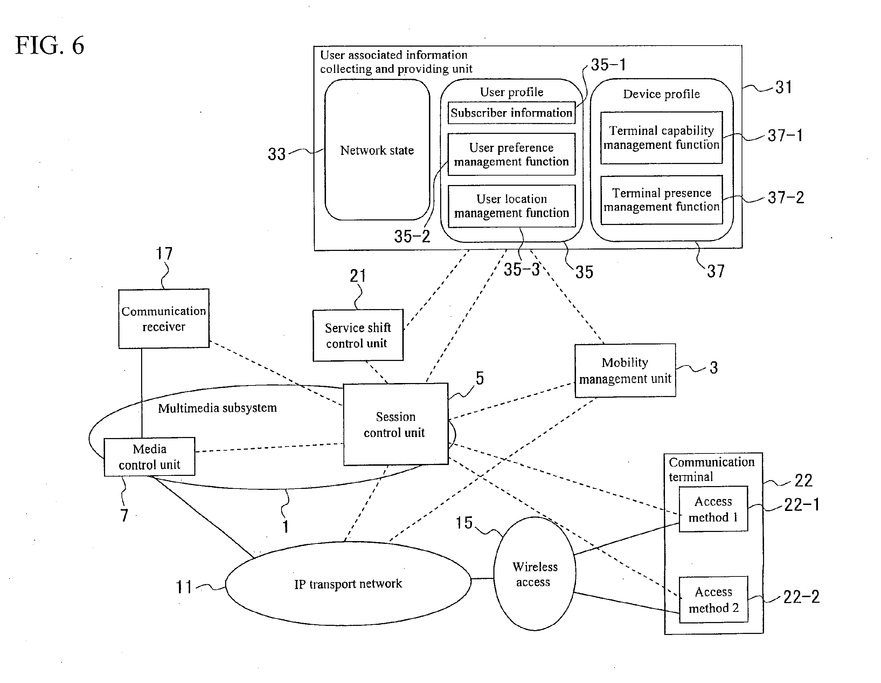

Next, one example of the configuration of a communication network control system according to a second embodiment of the present invention will be described. As shown in Fig 6, a communication network control system B according to the present embodiment basically has the same configuration as that shown in Fig 1, except that there is only one communication terminal 22 and an access method (1) 22-1 and an access method (2) 22-2 are switched. Here, essential constituent features in a user associated information collecting and providing unit 31 shown in Fig 6 are a network state 33, subscriber information 35-1, user location management function 35-3 and terminal capability management function 37-1.

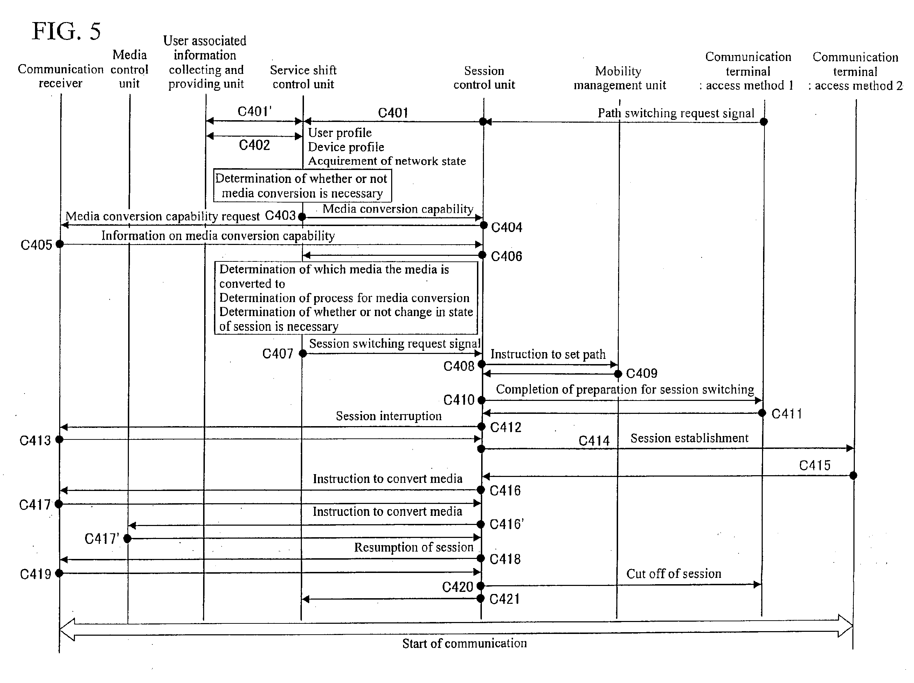

Fig 5 is a diagram showing the procedure for switching in the access method in the same terminal. Though so far, the procedure for switching between the communication terminal (#1) 23 and the switching destination communication terminal (#2) 25 has been described with reference to Figs 1 and 4, Fig 5 shows the procedure for switching paths and sessions between an access method 1 and an access method 2. Assume that the communication terminal 22 is provided with two access methods: the access method 1 based on mobile communication means of, for example, W-CDMA, and an access method 2 based on wireless communication means for high speed communication in hot spots, such as wireless LAN. Different access methods are shown for the access method 1 (22-1) and the access method 2 (22-2).

What type of access method the communication terminal 22 has is managed by the terminal capability management function 37-1 in the user associated information collecting and providing unit 31. The network state 33 in the user associated information collecting and providing unit 31 manages the path for the access method 1 (22-1), the path for the access method 2 (22-2) and the state of the respective networks, and provides QoS, the transmission rate and the type of the wireless access system to the service shift control unit 21.

There is a possibility that the operation system for management and control, for example, a multimedia subsystem or mobility management, may be different between the access method 1 (22-1) and the access method 2 (22-2). The user associated information collecting and providing unit 31 is operated by a third party company which is different from the network operator, and may play a role of providing information to the service shift control unit 21 by collecting information from the network operator. In addition, one network operator may manage all of the user associated information collecting and providing unit 31, the service shift control unit 21 and the different access methods. Therefore, it is desirable for the interface between the user associated information collecting and providing unit 31 and the respective nodes in the network to be standardized. The user location management function 35-3 in the user profile is used in the case where the available access method is set up on the basis of the user's location. For example, the location of a hot spot and the user's location are associated with each other, so that information showing that the user is within the service range of the hot spot is managed. Also, the location of a terminal may be specified using terminal presence management information to manage the terminal so as to be located in the service range of the hot spot.

Switching of terminals has been described in the description of the procedure in Fig 4, and change in the path in the same terminal is described with reference to Fig 6. It is possible to use the same basic flow. However, the above-described terminal switching request signal is changed to a path switching request signal. Though the terminal switching request signal includes the capability of the switching destination communication terminal, this information is not required in the case where the connection is switched within the same terminal. The path switching request signal includes the access method in a switching destination path, the situation of radio waves in the switching destination path, the routing address in the switching destination path, the domain name in the switching destination path, the bit rate of the switching destination path and the like (C401).

In addition, as shown in Fig 4, it is possible to automatically change the path from the network side, and in this case, the user associated in formation collecting and providing unit 31 and the service shift control unit 21 determine switching (C401'). The determination on the switching is made on the basis of the information provided mainly from the state of the network and the terminal presence management function. Switching is instructed when, for example, the communication terminal can use the two access methods and a higher bit rate than in the access method currently used is detected in the communication using the other access method. In the case where media conversion is necessary in accordance with the bit rate and QoS, the procedure for media conversion is carried out. However, the media are converted in the same terminal, and therefore, conversion due to the difference in the type of terminal and the attributes is not necessary, unlike in the case of Fig 4. It is possible to omit the process for interrupting the session when the media are not converted, and a process for starting up an application is also not necessary. For example, in the case where it is not necessary to change information on the session at all, the access method is sometimes switched only by instructing the mobility management unit to change the path. This instruction is prepared in the service shift control unit, and a session switching request signal including concrete instructions is transmitted. As a result, the access method can be smoothly changed in the same terminal.

According to the embodiment of the present invention, the user can easily switch the communication terminal used through a simple button operation or the like when switching is required in accordance with the change in his or her own situation. Thus, the effort required for operation and loss of time can be greatly reduced in comparison with the prior art, and service can be enjoyed at a higher level.

There is also an advantage in the server apparatus on the distribution side, such that distribution service can be continued without providing any new particular function. Additionally, the data format is optimized in accordance with individual communication terminals before transmission, even when the capability is different between the communication terminals on the receiver side. For this reason, there is an advantage, such that a large burden is not imposed on the communication side and the server apparatus side. In this manner, the basis for providing a service is shared, and thus, the user is not aware of the difference in wireless and wire networks and service or the difference in the type of communication terminal, unlike in the prior art, and it becomes possible to enjoy a seamless and ubiquitous service environment.

### Industrial Applicability

The present invention can be used in switching of terminals themselves or communication systems in terminals.

## Claims

1. A communication network control system for controlling continuous communication between a first communication terminal and a third communication terminal in such a manner that a second communication terminal is switched to the third communication terminal which is different from the second communication terminal without interrupting communication between the first communication terminal and the second communication terminal which is communicating with the first communication terminal, comprising:
mobility management means for setting up and managing a physical and logical transmission path between communication terminals;
session control means for controlling a session between communication terminals along the transmission path;
service shift control means for instructing the session control means to switch the session; and
user associated information collecting and providing means for collecting user associated information which is used when the session is switched and includes at least one of a network state, a user profile concerning a user and a device profile concerning a device, and providing the user associated information to the service shift control means.

2. The communication network control system according to Claim 1, **characterized in that**
the service shift control means receives a terminal switching request signal from the second communication terminal or determines whether or not the terminal is switched on the basis of the user associated information, to thereby generate a session switching request signal; and
the session control means has a function of receiving the session switching request signal to interrupt the session, a function of instructing the mobility management means to set up a transmission path with the third communication terminal, a function of establishing a session with the third communication path, and a function of resuming the session with a communication receiver after establishing the session.

3. The communication network control system according to Claim 1 or 2, **characterized in that** the user profile includes at least one of subscriber information of the user, user location information and taste and tendencies of the user, and the device profile includes at least one of the type of the device and information on the state of each device.

4. The communication network system according to Claim 1 or 2, **characterized in that** the service shift control means instructs the session control means to request switching of the session on the basis of information from the user associated information collecting and providing means or the terminal switching request from the second communication terminal.

5. The communication network control system according to Claim 1 of 2, **characterized in that** the user associated information collecting and providing means provides associated information on the basis of owner information and location information when the service shift control means requests provision of information on the user.

6. The communication network control system according to Claim 5, **characterized in that** a communication terminal switching process which is carried out mainly by the network is started up on the basis of information on the network state between the second communication terminal and the third communication terminal, and on the terminal capability provided from the user associated information collecting and providing means.

7. The communication network control system according to Claim 1 or 2, **characterized by** further comprising media conversion means on the network, wherein
the service shift control means generates information in terms of an instruction concerning media, and sends the information to the session control means together with a session switching request.

8. The communication network control system according to Claim 7, **characterized in that** whether or not a process for converting the media is carried out is determined on the basis of the terminal capability between the second communication terminal and aid third communication terminal and the network state.

9. The communication network control system according to Claim 7, **characterized in that** instructions in terms of media to which the media is to be converted and a method for the media conversion process determined on the basis of user preference.

10. The communication network control system according to Claim 7, **characterized in that** the media to which the media is to be converted are determined on the basis of the media conversion capability of the communication receiver and the conversion capability of the media conversion means on the network.

11. The communication network control system according to Claim 10, **characterized in that** the service shift control means generates information for instructing the network which is connected to the first communication terminal to request acquirement of the media conversion capability.

12. The communication network control system according to Claim 1 or 2, **characterized in that** the second communication terminal designates a switching destination communication terminal and sends the information to the network together with a terminal switching request.

13. The communication network control system according to Claim 12, **characterized in that** at least one of the terminal capability of the third communication terminal and terminal presence information which are acquired in advance through the exchange of information with the third communication terminal through short distance communication is included in the terminal switching request.

14. The communication network control system according to Claim 12, **characterized in that** information for instructing media to which the media is to be converted and the method for the media conversion process is provided together with a terminal switching request.

15. A communication network control system for controlling continuous communication by switching at least one access method according to which a second communication terminal having a number of access methods communicates with a first communication terminal to another access method according to which there is no communication between the first communication terminal and the second communication terminal without interrupting the communication, comprising:
mobility management means for setting up and managing a physical and logical transmission path between communication terminals;
session control means for controlling a session between communication terminals along the transmission path;
service shift control means for instructing the session control means to switch the session; and
user associated information collecting and providing means for collecting and providing user associated information which includes at least one of a network state, a user profile concerning a user and a device profile concerning a device, wherein
the service shift control means generates a session switching request signal and instructs the session control means on the basis of information from the user related information collecting and providing means or an access method switching request signal from a communication terminal.

16. The communication network control system according to Claim 15, **characterized in that** the user associated information collecting and providing means provides associated information to the service shift control means on the basis of owner information and location information when the service shift control means requests provision of information on the user.

17. The communication network control system according to Claim 15, **characterized in that** starting up of a process for switching the access method carried out mainly by the network is determined on the basis of at least one of the presence information on the communication terminal and the network state.

18. The communication network control system according to Claim 17, **characterized in that** the access method which is mainly carried out by the network is switched on the basis of user location information and user preference.

19. The communication network control system according to Claim 15, **characterized by** further comprising media conversion means within the network, wherein information instructed by the service shift control means in terms of media to which the media is to be converted and the method for the media conversion process is generated in the media conversion means.

20. The communication network control system according to Claim 19, **characterized in that** the method for the media conversion process is determined on the basis of the state of the network according to a current access method and an access method to which the access method is to be switched.

21. The communication network control system according to Claim 20, **characterized in that** instruction in terms of media to which the media is to be converted and the method for the media conversion process is made on the basis of the user preference.

22. The communication network control system according to Claim 21, **characterized in that** the media to which the media is to be converted is determined on the basis of at least one of the media conversion capability of a communication receiver and the conversion capability of the media conversion means of the network.

23. The communication network control system according to Claim 22, **characterized in that** the service shift control means instructs the network of the communication receiver to request the acquisition of the media conversion capability.

24. The communication network control system according to Claim 15, **characterized in that** the second communication terminal designates the access method to which the access method is to be switched and includes the information in the access method switching request signal to be transmitted to the network.

25. The communication network control system according to Claim 24, **characterized by** including at least one of the media to which the media is to be converted and instruction information of the method for the media conversion process in the access method switching request.

26. A communication network control method, comprising the steps of:
collecting user associated information which includes at least one of a network state, a user profile concerning a user and a device profile concerning a device, the user associated information being used when a session is switched in a state where a physical and logical transmission path is set up between a first communication terminal and a second communication terminal which is communicating with the first communication terminal; and
in the case where a session is instructed to be switched between communication terminals along the transmission path, switching the session for continuous communication between the first communication terminal and a third communication terminal by switching the second communication terminal to the third communication terminal which is different from the second communication terminal without interrupting communication between the first communication terminal and the second communication terminal on the basis of the collected user associated information in accordance with an instruction to switch the session.

27. The communication network control method according to Claim 26, **characterized by** comprising the step of providing associated information on the basis of owner information and location information when information concerning the user is requested.

28. The communication network control method according to Claim 26, **characterized in that** switching of the terminal carried out mainly by the network is started up on the basis of at least one of the network state between the second communication terminal and the third communication terminal and the terminal capability information.

29. The communication network control method according to Claim 26, **characterized by** the step of generating information which indicates the media to which the media is to be converted and the method for the media conversion process, as well as in that the session concerning the switching of the session is indicated on the basis of the infonnation.

30. The communication network control method according to Claim 29, **characterized in that** the media to which the media is to be converted is determined on the basis of the media conversion capability of a communication receiver and the conversion capability of media conversion means of the network.

31. The communication network control method according to Claim 30, **characterized by** comprising the step of generating information for instructing the network of the communication receiver to request acquisition of the media conversion capability.

32. A communication network control method, comprising the steps of:
collecting user associated information which includes at least one of a network state, a user profile concerning a user and a device profile concerning a device, the user associated information being used when a session is switched in a state where a physical and logical transmission path is set up between a first communication terminal and a second communication terminal having a number of access methods, which communicates with the first communication terminal; and
in the case where a session is instructed to be switched between the communication terminals along the transmission path, switching the session for continuous communication by switching an access method in the second communication terminal without interrupting the communication between the first.
communication terminal and the second communication terminal on the basis of the collected user associated information in accordance with an instruction to switch the session.

33. The communication network control method according to Claim 32, **characterized by** comprising the step of providing associated information on the basis of owner information and location information of the communication terminals when information concerning the user is requested.

34. The communication network control method according to Claim 32, **characterized in that** starting up of a process for switching the access method which is carried out mainly by the network is determined on the basis of at least one of the presence information of the communication terminals and the network state.

35. The communication network control method according to Claim 32, **characterized by** the step of generating information which indicates the media to which the media is to be converted and the method for the media conversion process, as well as in that the session concerning the switching of the session is indicated on the basis of the information.

36. The communication network control method according to Claim 35, **characterized in that** the media to which the media is to be converted is determined on the basis of the media conversion capability of a communication receiver and the conversion capability of media conversion means of the network.

37. The communication network control method according to Claim 36, **characterized by** comprising the step of generating information for instructing the network of the communication receiver to request acquisition of the media conversion capability.

38. A communication terminal for use in a communication network control system comprising: mobility management means for setting up and managing a physical and logical transmission path between communication terminals; session control means for controlling a session between communication terminals along the transmission path; service shift control means for instructing the session control means to switch the session; and user associated information collecting and providing means for collecting user associated information which is used when the session is switched and includes at least one of a network state, a user profile concerning a user and a device profile concerning a device, and providing the user associated information to the service shift control means, **characterized in that**
the service shift control means is requested to switch the terminal, and the communication terminal designates a switching destination communication terminal and includes the information in the terminal switching request to be transmitted to the network.

39. The communication terminal according to Claim 38, **characterized in that** the communication terminal exchanges information with the switching destination communication terminal in advance through short distance communication, and the terminal capability of a switching destination and the terminal presence information are included in the terminal switching request.

40. The communication terminal according to claim 38, **characterized in that** the media to which the media is to be converted and the instruction information of a method for a media conversion process are included in the terminal switching request.

41. A second communication terminal having a number of access methods, which communicates with a first communication terminal and controls continuous communication between the first communication terminal and the second communication terminal by switching at least one access method according to which the second communication terminal communicates with the first communication terminal to another access method according to which there is no communication without interrupting the communication in a communication network control system comprising: mobility management means for setting up and managing a physical and logical transmission path between communication terminals; session control means for controlling a session between communication terminals along the transmission path; service shift control means for instructing the session control means to switch the session; and user associated information collecting and providing means for collecting user associated information which is used when the session is switched and includes at least one of a network state, a user profile concerning a user and a device profile concerning a device, and providing the user associated information to the service shift control means, **characterized in that** the second communication terminal designates the access method to which the access method is to be switched and includes the information in an access method switching request signal to be transmitted to the network.

42. The second communication terminal according to Claim 41, **characterized in that** at least one of the media to which media is to be converted and the instruction information of the method for the media conversion process is included in the access method switching request.
